(19) **Europäisches Patentamt**
**European Patent Office**
**Office européen des brevets**

(11) **EP 2 921 457 B1**

(12) **FASCICULE DE BREVET EUROPEEN**

(45) Date de publication et mention
de la délivrance du brevet:
**11.01.2017 Bulletin 2017/02**

(51) Int Cl.:
**C02F 1/70** *(2006.01)*     **B09C 1/00** *(2006.01)*
**C22C 38/00** *(2006.01)*     **C01G 49/00** *(2006.01)*

(21) Numéro de dépôt: **15159732.5**

(22) Date de dépôt: **18.03.2015**

(54) **PROCÉDÉ DE DÉPOLLUTION IN SITU DE SOLS OU D'EAUX SOUTERRAINES CONTAMINÉS PAR DES COMPOSÉS ORGANIQUES HALOGÉNÉS AU MOYEN DE FONTE ET POUDRE RÉACTIVE POUR LA MISE EN OEUVRE DE CE PROCÉDÉ**

VERFAHREN ZUR IN-SITU-REINIGUNG VON BÖDEN ODER UNTERIRDISCHEN GEWÄSSERN, DIE MIT HALOGENIERTEN ORGANISCHEN VERBINDUNGEN KONTAMINIERT SIND, UNTER VERWENDUNG VON GUSSEISEN, UND REAKTIONSFÄHIGES PULVER ZUR UMSETZUNG DIESES VERFAHRENS

METHOD FOR ON-SITE DECONTAMINATION OF SOIL OR GROUNDWATER CONTAMINATED WITH HALOGENATED ORGANIC COMPOUNDS BY USING CAST IRON, AND REACTIVE POWDER FOR CARRYING OUT SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2014 FR 1452247**

(43) Date de publication de la demande:
**23.09.2015 Bulletin 2015/39**

(73) Titulaire: **SUEZ RR IWS Remediation France**
**69330 Meyzieu (FR)**

(72) Inventeur: **Devic-Bassaget, Lucien Boris**
**69330 Meyzieu (FR)**

(74) Mandataire: **Le Cacheux, Samuel L.R.**
**Jacobacci & Partners**
**15 cours Aristide Briand**
**69300 Caluire-et-Cuire (FR)**

(56) Documents cités:
**EP-A1- 0 968 773**     **WO-A2-2007/047946**
**DE-A1-102005 054 666**     **JP-A- 2005 138 107**
**KR-B1- 101 027 140**     **US-A1- 2009 191 084**

**Description**

La présente invention concerne le domaine technique de la décontamination de sols et d'eaux souterraines ou nappes phréatiques polluées par des composés organiques halogénés tels que notamment des composés organiques halogénés volatils, COHV en abrégé, l'halogène étant dans la plupart des cas le chlore.

Un brevet US 5 266 213 a proposé de dépolluer des eaux contaminées par des composés organiques chlorés en faisant passer lesdites eaux contaminées au travers d'une barrière poreuse contenant des particules de fer à valence zéro afin d'induire une réaction de réduction en milieu aqueux des composés organiques halogénés. Dans le cas des éthylènes (ou éthanes) chlorés, au contact du fer dans l'eau, une réaction réduction par déchloration se produit somme suit :

$$C_2Cl_nH_m \ + \ Fe^0 \ + \ H_20 \ \Rightarrow \ C_2Cl_{n-1}H_{m+1} \ + \ Cl^- \ + \ Fe^{2+} \ + \ OH^-$$

Il faut donc n atomes de fer pour réduire les n chlores du composé organique chloré à traiter et obtenir en fin de réduction le composé organique d'une part et d'autre part des ions fer et chlore qui ne sont plus des polluants dangereux.

Le brevet US 5 266 213 propose de réaliser la dépollution soit en réalisant des tranchées dans lesquelles des particules de fer à valence zéro sont mise en place avec un mélange de sable soit en pompant les eaux polluées au travers d'un filtrat poreux contenant des particules de fer à valence zéro.

Si la mise en oeuvre du fer à valence zéro comme proposé par le brevet US 5 266 213 permet d'obtenir une réduction des polluant organiques halogénés, il présente néanmoins l'inconvénient dans le cas de la réalisation de tranchées perméables réactives de pas permettre d'atteindre de grandes profondeurs car nécessite d'induire des excavations importantes qui ne sont pas toujours compatibles avec la topologie des lieux. Par ailleurs, dans le cas d'un traitement par pompage, ce dernier est susceptible d'induire dans des désordres dans le milieu souterrain.

Le brevet KR101027140 B1 propose une poudre réactive pour la préparation d'un coulis injectable pour la dépollution de sol, comprenant des particules réactives comprenant du fer à valence zéro où 95% des particules réactives présentent un diamètre inférieur ou égal à 20 micromètres.

Il est donc apparu le besoin d'un nouveau procédé de traitement in situ de sol ou d'eau souterraine qui permette soit atteindre des grandes profondeurs sans excavation importante, voire en laissant l'intégrité géotechnique du sol, soit d'éviter les risques de désordres liés au pompage.

Afin d'atteindre cet objectif, l'invention concerne un procédé de dépollution in situ de sols ou d'eaux souterraines contaminés par des composés organiques halogénés au moyen de fer à valence zéro, caractérisé en ce qu'il comprend une étape d'injection dans le sol d'un coulis aqueux de particules réactives constituée par de la fonte en suspension aqueuse, 95% des particules réactives présentant un diamètre inférieur ou égal à 20 $\mu$m et moins de 5 % des particules réactives un diamètre inférieur à 2 $\mu$m et le coulis ne comprenant aucun composé organique ou source de carbone organique, autre que les particules réactives, susceptible de faire l'objet d'une dégradation biologique.

La mise en oeuvre de fonte permet d'augmenter la surface du fer zéro valent, contenu dans la fonte, en contact avec le polluant à réduire par rapport à des particules de fer pur. De plus, les particules de fontes utilisées peuvent provenir de déchet de fonderie qui après un traitement approprié présentent la granulométrie recherchée.

La mise en oeuvre de particules de fonte avec de telles dimensions permet d'effectuer des injections souterraines avec une diffusion du coulis et donc des particules qui le constituent dans le sol avec des distances de pénétration ou de diffusion supérieures à 1 m et généralement de l'ordre de 1,25m à 1,50 m. Ainsi il est possible d'atteindre des profondeurs plus importantes que par des fouilles tout en réalisant des volumes de barrière perméable réactive élevés.

L'absence de composé organique dans le coulis présente l'avantage, lors de l'emploi de particules réactives, telles que selon l'invention, fines et stables à court terme en suspension dans l'eau, de permettre une décantation des particules une fois injectées dans le sol tout en évitant de nécessiter la dégradation biologique du polymère stabilisant qui peut être très ralentie voire inhibée en excès de fer. Cette disposition voit son intérêt pour les sols de faible activité biologique et pour les sites de fortes circulations d'eaux souterraines qui pourraient entraîner un déplacement des particules une fois injectée, ce qui est plus difficile une fois les grains de fonte décantés et logés dans les micropores des grains de sol.

Selon une forme de mise en oeuvre de l'invention, les particules réactives sont constituées par de la fonte comprenant 2% et 6,7% de carbone.

Selon une caractéristique de l'invention, aucune des particules réactives de fonte ne présente un diamètre inférieur à 1 $\mu$m. Cette caractéristique permet de limiter les déplacements des particules de fonte dans le sol et évite les risques inhérents à la manipulation et la mise en oeuvre de particules nanométriques.

Selon une caractéristique de l'invention, les particules réactives sont constituées de fonte grise à graphite lamellaire ou sphéroïdal. La mise en oeuvre d'une telle fonte permet d'avoir une surface spécifique de contact des polluants largement augmentée par la rugosité intrinsèque de la surface des particules de fonte, et donc d'augmenter considérablement la cinétique de réaction de déshalogénéisation des polluants.

Selon une caractéristique de l'invention, le coulis comprend entre 10 kg et 100 kg de particules réactives par m³ de coulis, de préférence entre 25 et 50 kg de particules réactives par m³ de coulis. Au sens de l'invention le coulis aqueux est une suspension en milieu aqueux.

Selon une forme de mise en oeuvre de l'invention, le procédé consiste à réaliser dans le sol une barrière poreuse dépolluante en réalisant une série d'injection dans le sol à partir de forage verticaux, chaque forage étant situé à une distance inférieure à 5 m du forage le plus proche, de préférence à moins de 3 m.

L'invention concerne également une poudre réactive pour la préparation d'un coulis injectable pour la dépollution de sol, poudre comprenant des particules réactives comprenant du fer à valence zéro caractérisé en ce que les particules sont constituées de fonte avec 95% des particules réactives présentent un diamètre inférieur ou égal à 20 μm et moins de 5 % des particules inférieures à 2 μm.

Selon une caractéristique de l'invention, les particules réactives constitutive de la poudre sont constituées de fonte comprenant entre 2% et 6.7% de carbone.

Selon une caractéristique de l'invention, aucune des particules réactives ne présente un diamètre inférieur à 1 μm.

Selon une caractéristique de l'invention, les particules réactives sont constituées de fonte grise à graphite sphéroïdal ou lamellaire.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

De même, les différentes caractéristiques, variantes et formes de réalisation de la poudre réactive selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée d'une forme non limitative de mise en oeuvre du procédé conforme à l'invention.

Dans un exemple non limitatif de mis en oeuvre l'invention propose de réaliser une barrière perméables de traitement entre une source de pollution contenant des composés organiques halogénés et une nappe phréatique suitée en aval de la source de pollution eu égard au sens d'écoulement des eaux souterraines.

A cet effet, il est réalisé, dans le terrain à traiter, des forages d'injection en quinconce situés à 2,50 m les uns des autres répartis sur une longueur de plusieurs dizaine de mètre jusqu'à une profondeur de l'ordre de 35 m. Chaque forage comprend un scellement étanche en coulis de bentonite-ciment avec des manchettes d'injection disposées tous les 33 cm qui permettent la diffusion du coulis injecté dans le milieu extérieur au forage.

Une fois les forages réalisés, il est préparé un coulis aqueux comme suit.

Dans un malaxeur haute turbulence, 50 kg de particules réactives sont ajoutés et mélangés pendant 5 minutes à 100l d'eau. Les particules réactives ont des dimensions telles que 95% des particules réactives présentent un diamètre inférieur ou égal à 20 μm et moins de 5 % des particules réactives un diamètre inférieur à 2 μm. De manière préférée, la poudre de particules réactives ne comprend aucune particule ayant un diamètre inférieur à 1 μm. Par diamètre, il convient de comprendre la plus grande dimension de chaque particule. Par ailleurs, les particules réactives sont, selon cet exemple, constituées de fonte grise à graphite lamellaire ou sphéroïdal. Le mélange obtenu est ensuite transféré dans le malaxeur à agitation lente pour y être mélangé avec 900 litres d'eau et ainsi obtenir le coulis selon l'invention qui est prêt à être injecté dans les forages et qui présente les caractéristiques suivantes :

|  | Coulis |
|---|---|
| Eau | 994 Kg/m3 |
| Particules réactives | 50 Kg/m3 |
| Viscosité Marsh à 5' | 26 - 40 Sec/litre |
| Densité | 1,05 Kg/l |

Bien entendu, la quantité de particules réactives peut varier en fonction des conditions de mise en oeuvre pour être comprises par exemple entre 10kg et 100kg par m³ de coulis. Selon l'invention, le coulis est préparé sans stabilisant uniquement par mélange des particules réactives dans de l'eau et sans apport de matière carbonée organique. En effet, la finesse des particules réactives mises en oeuvre selon l'invention permet d'éviter l'emploi de stabilisant.

Bien entendu, diverses modifications peuvent être apportées au procédé selon l'invention dans le cadre des revendications annexées.

**Revendications**

1. Procédé de dépollution in situ de sols ou d'eaux souterraines contaminés par des composés organiques halogénés au moyen de fer à valence zéro, **caractérisé en ce qu'**il comprend une étape d'injection dans le sol d'un coulis aqueux de particules réactives constituées par de la fonte en suspension aqueuse, 95% des particules réactives présentant un diamètre inférieur ou égal à 20 $\mu$m, moins de 5 % des particules réactives un diamètre inférieur à 2 $\mu$m et le coulis ne comprenant aucun composé organique ou source de carbone organique, autre que les particules réactives, susceptible de faire l'objet d'une dégradation biologique.

2. Procédé de dépollution de sol selon la revendication 1, **caractérisé en ce que** les particules réactives sont constituées de fonte comprenant entre 2% et 6,7% de carbone.

3. Procédé de dépollution selon la revendication 1 ou 2, **caractérisé en ce qu'**aucune particule réactive ne présente un diamètre inférieur à 1$\mu$m.

4. Procédé de dépollution selon l'une des revendications 1 à 3, **caractérisé en ce que** les particules réactives sont constituées de fonte grise à graphite sphéroïdal ou lamellaire.

5. Procédé de dépollution selon l'une des revendications précédentes, **caractérisé en ce que** le coulis comprend entre 10 kg et 100 kg de particules réactives par m$^3$ de coulis, de préférence entre 25 et 50 kg de poudre par m$^3$ de coulis.

6. Procédé de dépollution selon l'une des revendications précédentes caractérisé en que qu'il consiste à réaliser dans le sol une barrière perméable dépolluante en réalisant une série d'injection dans le sol à partir de forage verticaux chaque forage étant situés à une distance inférieure à 3m du forage le plus proche.

7. Poudre réactive pour la préparation d'un coulis injectable pour la dépollution de sol, comprenant des particules réactives comprenant du fer à valence zéro **caractérisé en ce que** les particules sont constituée de fonte avec 95% des particules réactives présentent un diamètre inférieur ou égal à 20 $\mu$m, moins de 5 % des particules un diamètre inférieure à 2 $\mu$m.

8. Poudre réactive selon la revendication 7, **caractérisé en ce que** les particules réactives sont constituées de fonte comprenant entre 2% et 6.7% de carbone.

9. Poudre réactive selon la revendication 7 ou 8, **caractérisé en ce qu'**aucune particule réactive ne présente un diamètre inférieur à 1$\mu$m.

10. Poudre réactive selon l'une des revendications 7 à 9, **caractérisé en ce que** les particules réactives sont constituées de fonte grise à graphite sphéroïdal ou lamellaire.

**Patentansprüche**

1. Verfahren zur in-situ-Reinigung von Böden oder unterirdischen Gewässern, die mit halogenierten organischen Verbindungen kontatniniert sind, unter Verwendung von nullwertigem Eisen, **dadurch gekennzeichnet, daß** es einen Schritt des Einspritzens in den Boden eines wäßrigen Schlamms von reaktiven Partikeln, der sich aus Gußeisen in wäßriger Lösung zusammensetzt, wobei 95 % der reaktiven Partikel einen Durchmesser von weniger als oder gleich 20 $\mu$m aufweisen, weniger als 5 % der reaktiven Partikel einen Durchmesser von weniger als 2 $\mu$m aufweisen und der Schlamm keine andere organische Verbindung oder organische Kohlenstoffquelle als die reaktiven Partikel aufweist, die Gegenstand eines biologischen Abbaus sein könnte.

2. Verfahren zur Bodenreinigung gemäß Anspruch 1, **dadurch gekennzeichnet, daß** die reaktiven Partikel aus zwischen 2 % und 6,7 % Kohlenstoff enthaltendem Gußeisen bestehen.

3. Reinigungsverfahren gemäß Anspruch 1 oder 2, **dadurch gekennzeichnet, daß** kein reaktives Partikel einen Durchmesser von weniger als 1 μm aufweist.

4. Reinigungsverfahren gemäß einem der Ansprüche 1 bis 3, **dadurch gekennzeichnet, daß** die reaktiven Partikel aus grauem Gußeisen mit sphärischem oder lamellenartigem Graphit bestehen.

5. Reinigungsverfahren gemäß einem der vorangehenden Anspruche, **dadurch gekennzeichnet, daß** der Schlamm zwischen 10 kg und 100 kg reaktive Partikel pro m³ Schlamm, vorzugsweise zwischen 25 und 50 kg Pulver pro m³ Schlamm, enthält.

6. Reinigungsverfahren gemäß einem der vorangehenden Ansprüche, dadurch gekenntzeichnet, daß es darin besteht, im Boden eine reinigende durchlässige Barriere einzurichten, indem eine Reihe von Einspritzungen in den Boden von senkrechten Bohrungen ausgehend durchgeführt wird, wobei jede Bohrung in einem Abstand von weniger als 3 m von der nächstliegenden Bohrung erfolgt.

7. Reaktives Pulver für die Zubereitung eines für die Bodenreinigung einspritzbaren Schlamms, das reaktive Partikel mit nullwertigem Eisen aufweist, **dadurch gekennzeichnet, daß** die Partikel aus Gußeisen bestehen, wobei 95 % der reaktiven Partikel einen Durchmesser von weniger als oder gleich 20 μm aufweisen, weniger als 5 % der reaktiven Partikel einen Durchmesser von weniger als 2 μm aufweisen.

8. Reaktives Pulver gemäß Anspruch 7, **dadurch gekennzeichnet, daß** die reaktiven Partikel aus zwischen 2 % und 6,7 % Kohlenstoff enthaltendem Gußeisen bestehen.

9. Reaktives Pulver gemäß Anspruch 7 oder 8, **dadurch gekennzeichnet, daß** kein reaktives Partikel einen Durchmesser von weniger als 1 μm aufweist.

10. Reaktives Pulver gemäß einem der Ansprüche 7 bis 9, **dadurch gekennzeichnet, daß** die reaktiven Partikel aus grauem Gußeisen mit sphärischem oder lamellenartigem Graphit bestehen.

**Claims**

1. Process of in-situ decontamination of soil and subterranean water contaminated by halogenated organic compounds using zero valence iron, **characterised in that** it contains a stage of injecting into the ground an aqueous slurry of reactive particles constituted of cast iron in an aqueous suspension, with 95% of reactive particles presenting a diameter less than or equal to 20μm, less than 5% of the reactive particles presenting a diameter lower than 2μm and the slurry not containing any organic compound or source of organic carbon, other than the reactive particles, sensitive to being subject to biological degradation.

2. Process of soil decontamination according to claim 1, **characterised in that** the reactive particles are constituted of cast iron comprising between 2% and 6.7% carbon.

3. Process of soil decontamination according to claim 1 or 2, **characterised in that** no reactive particle presents a diameter less than 1μm.

4. Process of soil decontamination according to one of claims 1 or 3, **characterised in that** the reactive particles are constituted of grey cast iron with spheroidal or lamellar graphite.

5. Process of soil decontamination according to one of the preceding claims, **characterised in that** the slurry comprises between 10kg and 100kg of reactive particles per m³ of slurry, preferably between 25 and 50kg of powder per m³ of slurry.

6. Process of soil decontamination according to one of the preceding claims, **characterised in that** it consists of creating a permeable decontaminating barrier in the soil by carrying out a series of injections in the soil through vertical drilling, with each drilling point being located at a distance of less than 3m from the nearest other drilling point.

7. Reactive powder for the preparation of an injectable slurry for the soil decontamination, comprised of reactive particles comprising zero valence iron **characterised in that** the particles are constituted of cast iron with 95% of reactive particles presenting a diameter less than or equal to 20μm, less than 5% of the particles with a diameter

lower than 2μm.

8. Reactive powder according to claim 7, **characterised in that** the reactive particles are constituted of cast iron containing between 2% and 6.7% carbon.

9. Reactive powder according to claim 7 or 8, **characterised in that** no reactive particle presents a diameter less than 1μm.

10. Reactive powder according to one of claims 7 to 9, **characterised in that** the reactive particles are constituted of grey cast iron with spheroidal or lamellar graphite.

**EP 2 921 457 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5266213 A
- KR 101027140 B1